# EUROPEAN PATENT SPECIFICATION

(11) **EP 2 943 842 B1**
(45) Date of publication and mention of the grant of the patent: **06.03.2019**
(21) Application number: 13700860.3
(22) Date of filing: 14.01.2013
(51) Int. Cl.: G05B 15/02, G06Q 50/06

(54) **ENERGY MANAGEMENT GATEWAY**
ENERGIEMANAGEMENT-GATEWAY
PASSERELLE DE GESTION D'ÉNERGIE

(43) Date of publication of application: 18.11.2015
(73) Proprietor: ABB AG, 68309 Mannheim (DE)
(72) Inventor: RIZVANOVIC, Larisa, S-724 71 Västerås (SE); STOLL, Pia, S-72346 Västerås (SE); LENNVALL, Tomas, S-722 21 Västerås (SE)
(86) International application number: PCT/EP2013/050540
(87) International publication number: WO 2014/108209

(56) References cited:
- US-A1- 2011 202 189
- US-A1- 2012 016 528
- US-A1- 2012 065 796
- US-A1- 2012 083 934
- US-A1- 2012 296 480

## Description

### TECHNICAL FIELD

The present disclosure relates to a method of an energy management gateway scheduling a plurality of electrical loads.

### BACKGROUND

According to the European Council (European Commission Research), the energy consumption of houses and buildings, taking into account the whole life cycle, stands for 40% of total EU energy consumption. Both transportation and food production consume less energy than our buildings.

In electricity grids, demand response (DR) is used to manage customer consumption of electricity in response to supply conditions, for example, having electricity customers reduce their consumption at critical times or in response to market prices. Demand response services, for industrial or residential buildings, have been around for long time, e.g., implemented as shutting off loads (load shedding) when the grid peak condition requires this. Direct control of heating, ventilation and conditioning (HVAC) equipment in industrial buildings are quite common today. But traditional DR is primary utilities' control task that often focuses on a few end users with limited customer options and fixed rates and participation incentives.

Energy gateways, used in today's DR, are usually provided by the utility (i.e. the energy provider) and tailored to fit in the certain configuration of the utility. A customer may be able to enter preferences as to how the gateway should control equipment based on received DR signals.

Home/building automation solutions are static in their configurations and user configuration has been possible for safety and comfort. Possibilities for a user to change settings/parameters of the system are limited to set actions, like setting thermostats or setting up a weekly schema for blinds, requiring only in-house information from in-house sensors. There is no possibility for the user to configure the home/building automation to react on dynamic changes in cost of energy or environmental impact of the energy use as this information can not be communicated to the home/building automation system in an automatic fashion.

US 2012/083934 discloses a method for monitoring and controlling energy usage in an office environment. Energy usage information and sensor data are received from a status and control unit for an appliance. An appropriate energy profile for the appliance is determined. The energy profile is customizable by an end user based on preferences and schedules. The energy profile corresponds to appliances within an energy group. An energy group is here a logical grouping of end devices but may represent a physical area such as a cubicle or an office. An energy group may be configurable by an end user. Thus, each group corresponds to a user.

US 2012/296480 discloses a system that generates an optimized energy schedule as a function of the a received demand response schedule, input user preferences, and predicted environmental variables. US 2012/065796 and US 2012/016528 disclose the optimisation of an energy grid via demand response information and categorisation of the electrical power consumer.

### SUMMARY

It is an objective of the present invention to improve the usability and flexibility of an energy management gateway.

According to an aspect of the present invention, there is provided a method of an energy management gateway according to claim 1.

According to another aspect of the present invention, there is provided a computer program product according to claim 9.

According to another aspect of the present invention, there is provided an energy management gateway according to claim 10.

According to another aspect of the present invention, there is provided a computer program according to claim 12.

The inventors have realised that an energy management gateway may be improved by handling constant loads and sporadic loads differently from each other. Constant loads are usually not turned off completely whereas sporadic loads only run for a limited time period and thus have different properties than the constant loads and can be scheduled differently by the energy management gateway. Constant loads such as heating, ventilation, air conditioning etc. can conveniently be scheduled based on information from an external service provider, e.g. a DR service provider, without or with limited input from a user e.g. pre-set parameter values for different DR properties (e.g. high/low price). The sporadic loads on the other hand can be scheduled more freely with e.g. start and stop times, conveniently based on information inputted by a user of the energy management gateway, possibly in combination with information from the external service provider. Thus, the energy management system (EMS) logic is more optimized and the inputs needed from the user can be at least mainly limited to the sporadic loads whereby the effort of the user can be reduced.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. The use of "first", "second" etc. for different features/components of the present disclosure are only intended to distinguish the features/components from other similar features/components and not to impart any order or hierarchy to the features/components.

### BRIEF DESCRIPTION OF THE DRA WINGS

Embodiments will be described, by way of example, with reference to the accompanying drawings, in which:
Fig 1 is a schematic block diagram of an embodiment of an energy management system in accordance with the present invention.
Fig 2 is a schematic block diagram of an embodiment of an energy management gateway of the present invention.
Fig 3 is a schematic flow chart of an embodiment of a method of the present invention.
Fig 4 is a schematic illustration of an embodiment of a computer program product of the present invention.
Fig 5 is a schematic diagram illustrating different types of input to an embodiment of an energy management gateway of the present invention.
Fig 6 schematically illustrates how a user can disable EMS logic via a graphical user interface in accordance with an embodiment of the present invention.
Fig 7 is a schematic diagram illustrating an example embodiment of a dispatcher of an energy management gateway, in accordance with the present invention.
Fig 8 is a schematic flow chart illustrating an example embodiment of a scheduler of an energy management gateway, in accordance with the present invention.

### DETAILED DESCRIPTION

Embodiments will now be described more fully hereinafter with reference to the accompanying drawings, in which certain embodiments are shown. However, other embodiments in many different forms are possible within the scope of the present disclosure. Rather, the following embodiments are provided by way of example so that this disclosure will be thorough and complete, and will fully convey the scope of the disclosure to those skilled in the art. Like numbers refer to like elements throughout the description.

Whether a load should be categorized as a constant or sporadic load may be predefined in the energy management gateway prior to installation, or it may be defined upon installation by a user or a technician. It may also be possible for a user or technician to indicate whether a load should be categorized as a constant or sporadic load when adding a new load to be controlled by the energy management gateway via the user interface (UI).

Constant loads include e.g. heating, ventilation and air conditioning, and other electrical loads which are normally not turned off completely, at least not over an extended period of time (e.g. heating and air conditioning may be seasonally turned on or off for a building).

Sporadic loads are loads which are only turned on during a limited time period, e.g. a part of a day. Sporadic loads may be initiated by a user and/or may be used non-regularly (i.e. sporadically). Sporadic loads include e.g. a washing machine, a dish washer, charging an electric vehicle etc.

The energy management gateway may be any suitable gateway able to perform an embodiment of a method of the present disclosure. The gateway may e.g. be an Energy Service Interface/ Home Area Network (ESI/HAN) gateway. The gateway may be located at the premises of a user. The gateway holds EMS logic for controlling/scheduling electrical load(s) e.g. at the user premises according to its configuration. The premises may e.g. be a residential or industrial building or other facility. The gateway may also involve control of charging or discharging of local electricity storage such as batteries or the like, and/or of local energy production e.g. solar or wind power equipment at the user premises.

Demand response (DR), also known as automated demand response (ADR), is herein used for a system where signals are sent from a service provider to the gateway, which signals include information about the electricity being delivered now, or in the future, allowing the gateway to act on this information when scheduling the electrical loads. The information which may be sent with DR signals include e.g. price, CO2 emission related to the available electricity, general availability of electricity, and/or availability of locally generated electricity such as solar or wind power. Information about locally generated electricity may alternatively be provided separately from the signals from the external service provider.

In some embodiments the information obtained from an external service provider is demand response (DR) information. Thus, the external service provider may be or comprise a DR server.

In some embodiments, the inputted information comprises deadline(s) for when at least one of the sporadic loads should be scheduled in time. Time limits (deadlines) may be simple and convenient information for a user to input into the energy management gateway, for scheduling sporadic loads. In some embodiments all sporadic loads currently managed by the energy management gateway are scheduled based on user inputted information comprising deadlines for each of the sporadic loads. Sporadic loads are often initiated by the user, e.g. a washing machine needs to run a washing cycle. The user may then want to schedule the sporadic load to run at a convenient time, e.g. over night or during office hours when no one is home to be disturbed by any noise generated by the load. The user may then input a start and/or stop time for the load into the gateway via its UI. In some cases, the user may start the load manually, e.g. plugging in an electrical vehicle, and may input a deadline for when the load should be turned off. Other, or combined, scenarios are also contemplated.

In some embodiments, the inputted information comprises a threshold value of an electricity property, whereby the scheduling of the constant load(s) comprises reducing or increasing a constant load based on whether the electricity property of available electricity is above or below the threshold. The electricity property may e.g. be any or a combination of price, CO2 emission or such e.g. obtained from the external service provider. The property may relate to currently available electricity delivered to the loads managed by the energy management gateway, or to projected properties of electricity available sometime in the future, e.g. in an hour or next day. The user may thus input a threshold value of e.g. price or CO2 emissions, or a combination thereof, whereby if the property value (e.g. price) rises above this threshold, the constant load, or all constant loads are reduced (i.e. the consumption of electricity of the constant load(s) is reduced). Similarly, when the property value comes down below the threshold, or below a second low threshold, the constant load, or all constant loads are increased (i.e. the consumption of electricity of the constant load(s) is increased). Since sporadic loads may need to be executed within a deadline, the scheduling of sporadic loads may disregard the inputted threshold values.

In some embodiments, the sporadic load(s) are scheduled based on information obtained from the external service provider if the user has inputted an enable command via the user interface for enabling use of the information obtained from the external service provider for the scheduling of the sporadic load(s). Similarly, the sporadic load(s) may be scheduled not based on information obtained from the external service provider if the user has inputted a disable command via the user interface for disabling use of the information obtained from the external service provider for the scheduling of the sporadic load(s). The inventors have realised that it may sometimes be inconvenient to allow the gateway to control the electric loads of a user premises in accordance with information (e.g. DR) from the external service provider, e.g. when the user does not follow his/her regular routine e.g. has a party or is away on vacation. On the other hand, it may in other instances be convenient to allow the gateway to consider e.g. DR information in addition to the information inputted via the UI, as mentioned above. The inventors propose to solve this problem by allowing the user to enable and/or disable the DR based EMS logic (logically connecting/disconnecting the DR EMS logic from the electrical devices without physically disconnecting the gateway). The gateway may continue to operate and e.g. communicate with the external service provider (e.g. DR), but without controlling the electric loads based on information from the external service provider.

In some embodiments, the constant load(s) and/or the sporadic load(s) are scheduled based also on obtained information about local energy production. The gateway may involve control of charging or discharging of local electricity storage such as batteries or the like, and/or of local energy production e.g. solar or wind power equipment at the gateway/user premises. Information about the local energy production may also be sent to the external service provider, and information sent to the external service provider may also include user energy consumption information, information about the energy efficiency of the energy management system and/or about the home automation system or changes to be introduced to settings in the energy management or home automation system.

In some embodiments, the user interface is a graphical user interface (GUI) and may comprise a touch screen. This may be a convenient and self-explanatory way for a user to interact with the gateway e.g. for inputting commands and/or preferences to the gateway.

In some embodiments, the user interface is connectable to a wireless user equipment, e.g. a mobile phone or portable computer. This may allow a user to input commands and/or preferences to the gateway via a wireless user equipment (UE) over a radio interface. The UE may e.g. be a regular smartphone or computer of the user, possibly running an application designed for interacting with the gateway, or connected to such an application via the internet. The gateway may then not need a screen or such to present information to the user. Instead, such information may be presented on a screen of the UE by means of the application.

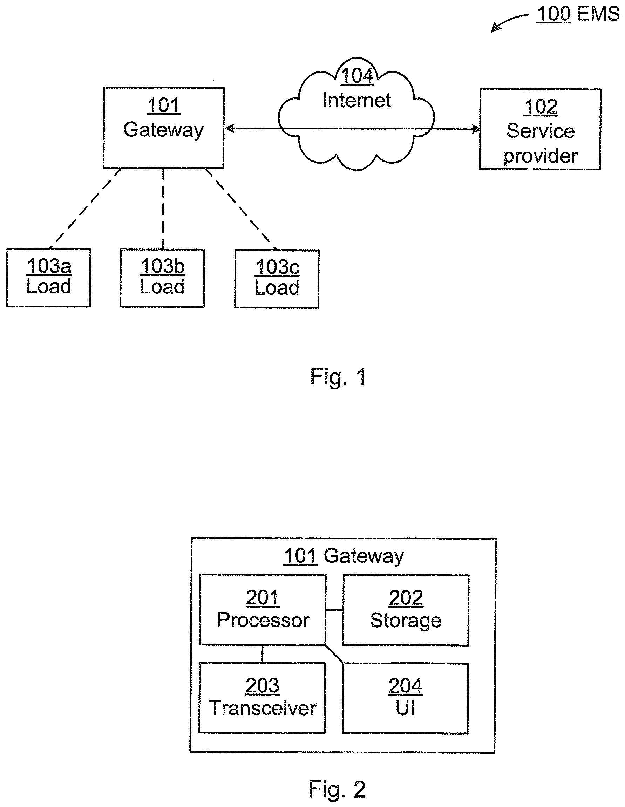

Figure 1 schematically illustrates an energy management system (EMS) 100 where an energy management gateway 101 of the EMS communicates with a server 102 of a service provider via a network 104, e.g. the internet and/or a wide area network (WAN). The communication may be wired or at least partly wireless. If the communication is at least partly wireless, the gateway 101 may be configured to connect to the network 104 over a radio interface, while the server 102 connects to the network 104 via a wired or wireless interface. Messages are transmitted from the gateway 101 to the server 102 and *vice versa* (as indicated by the arrow in figure 1). The gateway 101 is associated with a plurality of electrical loads 103 (here illustrated by three loads a-c) and is configured to be able to control/manage the electrical loads 103 of respective electrical devices associated with the loads.

Figure 2 schematically illustrates an embodiment of an energy management gateway 101. The gateway 101 comprises processor circuitry of a processor 201 e.g. a central processing unit (CPU). The processor 201 may comprise one or a plurality of processing units in the form of microprocessor(s). However, other suitable devices with computing capabilities could be comprised in the processor 201, e.g. an application specific integrated circuit (ASIC), a field programmable gate array (FPGA) or a complex programmable logic device (CPLD). The processor 201 is configured to run one or several computer program(s) or software (here generally called instructions) stored in a storage unit 202 e.g. a memory. The storage unit 202 is regarded as a computer readable means and may e.g. be in the form of a Random Access Memory (RAM), a Flash memory or other solid state memory, or a hard disk, or a combination thereof. The processor 201 is also configured to store data in the storage unit 202, as needed. The storage unit 202 may e.g. hold instructions on how to categorize the electrical loads as a constant load or a sporadic load, e.g. defining which load should be categorized as a constant or sporadic load. The storage unit 202 may additionally or alternatively e.g. hold information obtained from the external service provider and/or inputted by a user via the UI and/or other EMS logic. The gateway 101 also comprises a transmitter and a receiver, and optionally (if the gateway is configured for communication over a radio interface) an antenna, which may be combined to form a transceiver 203 or be present as distinct units within the gateway 101. The transmitter is configured to cooperate with the processor to transform data bits to be transmitted e.g. over a radio interface to a suitable radio signal in accordance with the radio access technology (RAT) used by the Radio Access Network (RAN) via which the data bits are to be transmitted. The receiver is configured to cooperate with the processor 201 to transform e.g. a received radio signal to transmitted data bits. The antenna, if used, is used by the transceiver 204 for transmitting and receiving, respectively, radio signals. The gateway 101 also comprises a user interface (UI) 204 comprised in or in cooperation with the processor 201 for e.g. allowing a user to input preferences and/or other commands or information into the gateway 101. The UI 204 may e.g. be a graphical user interface (GUI).

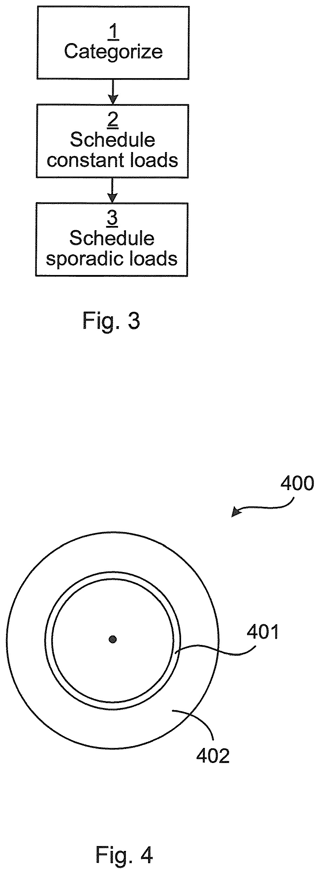

Figure 3 is a schematic flow chart of an embodiment of a method of the present invention. Each of the plurality of electrical loads is scheduled 1 as either a constant load or a sporadic load. This categorizing may e.g. be based on preprograming of the gateway 101 at manufacture or installation or on preferences/information inputted into the gateway by a user or technician via its UI 204 and stored in the storage unit 202 of the gateway. After the loads have been categorized 1, they can be scheduled differently based on whether the load has been categorized as a constant load or a sporadic load. The constant load(s) are scheduled 2 based on information obtained from an external service provider 102 and/or on information inputted by a user via a user interface 204 of the gateway, e.g. inputted thresholds as discussed herein. The sporadic load(s) are scheduled 3 based on information obtained from an external service provider 102 and/or on information inputted by a user via a user interface 204 of the gateway, e.g. inputted deadlines as discussed herein. The steps of scheduling the different loads may occur in any order or concurrently, as convenient, and is not limited to first scheduling 2 constant loads and then scheduling 3 sporadic loads.

Figure 4 illustrates an embodiment of a computer program product 4 of the present invention. The computer program product 400 comprises a computer readable medium 402 holding a computer program 401 in the form of computer-executable components 401. The computer program/computer-executable components 401 may be configured to cause an energy management gateway 101, e.g. as discussed herein, for scheduling a plurality of electrical loads 103 associated with the gateway, to perform an embodiment of the method of the present invention. The computer program/computer-executable components may be run on the processor 201 of the gateway 101 for causing the gateway to perform the method. The computer program product 400 may e.g. be comprised in a storage unit or memory 202 comprised in the gateway 101 and associated with the processor 201. Alternatively, the computer program product 400 may be, or be part of, a separate, e.g. mobile, storage means, such as a computer readable disc, e.g. CD or DVD or hard disc/drive, or a solid state storage medium, e.g. a RAM or Flash memory.

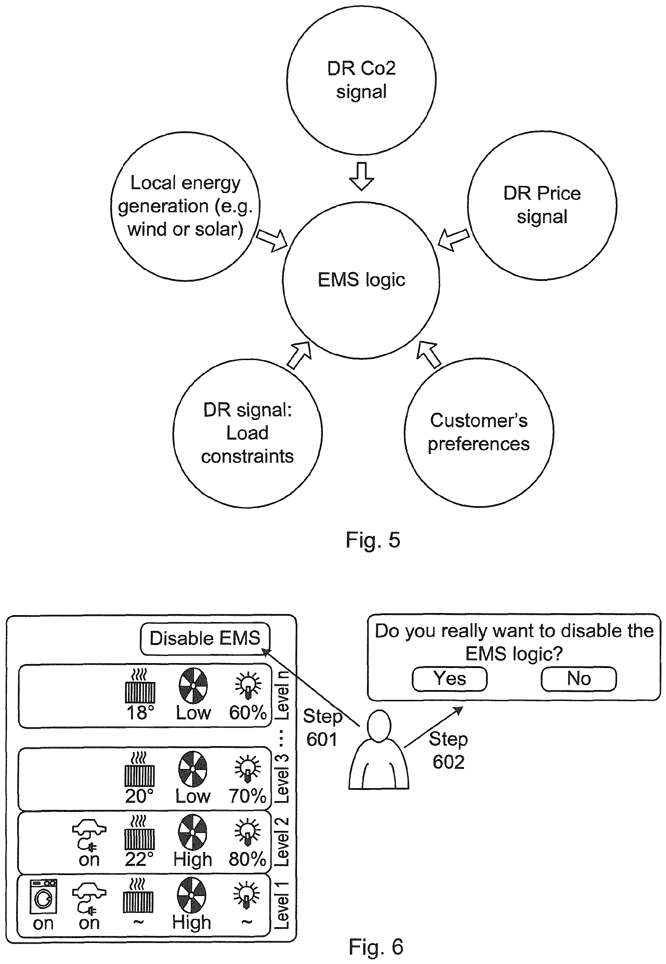

Figure 5 schematically illustrates some examples of different kinds of inputs to the EMS logic of the gateway 101. The examples in figure 5 comprises DR signal relating to the CO2 emissions created by the production of the available electricity, DR signal relating to the price of electricity, user preferences e.g. inputted via the user interface of the gateway, DR signal relating to a load constraint in the distribution or production of electricity, and availability of local energy generation e.g. wind or solar (which may be produced locally in the vicinity of the gateway). Other types of input are also contemplated. Thus, energy management by means of the energy management gateway 101 can be based on different kinds of inputs.

Figure 6 illustrates how a user may input an enable command into the gateway 101 by interaction with a GUI 204. The GUI is in this embodiment a touch screen of the gateway 101 or of a user equipment (UE) connected to the gateway (via wire or wirelessly). Via the GUI 204, the user can choose between different gateway levels, indicated as levels i..n in the figure, which allows the user to control how the EMS logic of the gateway schedules the different loads 103. However, there is also a graphical push button which allows the user to, by pressing 601 the button, enable/disable the EMS logic for sporadic loads. As an extra safety measure, a dialog box may appear on the GUI in response to the user pressing 601 the enable button, whereby the user has to press 602 an additional graphical button in order to confirm that the EMS logic should be enabled. The switch to the enabled mode is then not effected until confirmed by the user.

### Example

This example illustrates how an energy management gateway may handle constant loads differently from sporadic loads (herein also called one-shot loads).

The electric loads 103 are divided into two types:
- Constant loads which are active all the time and the only things managed by the EMS Logic of the gateway 101 are the device parameters, e.g., dimmer value, thermostat temperature, ventilation fan speed. The user may have preset parameter values for different information obtained from the external service provider 102 (e.g. low /high energy cost, low/high energy production CO2 emission, etc).
- One-shot loads are only active sporadically, usually activated by the user, e.g., EVs, washing machines etc. Active one-shot loads may have execution times and deadlines before which they should have completed their execution. E.g., charging an electric vehicle (EV) may have an execution time of 4 hours and the deadline is 07:00 (e.g. as inputted by the user).

The EMS Logic contains two parts which handle these loads: the Dispatcher handles all loads on an hourly basis and event basis at "run-time"; every hour it makes sure constant loads run with the proper parameters and that one-shot loads run when they are scheduled to run and when configuration settings, for example threshold values, are changed by the user, it will handle loads accordingly based on the changed settings. The second part is the Scheduler which finds the most suitable time for one-shot loads to run in within the execution time from their activation to deadline.

The dispatcher makes a decision of when to change parameters for constant loads, based on the current energy price and/or CO2 signal and a threshold value (set by the user), and the parameters are set such that the properties (e.g. price and CO2 emissions) are in accordance with the user-set threshold values for the device 103.

The scheduler considers all the prices and/or CO2 values in the time interval when searching for the most suitable slots for one-shot loads to run in. In the case of one-shot loads, the scheduler may ignore the threshold values inputted by the user since it needs to schedule the sporadic/one-shot load 103 within the deadline inputted by the user.

Thus, in embodiments of the method of the present invention, the method comprises some or all of the following steps:
- categorizing 1 each of the plurality of electrical loads as either a constant load or a sporadic load;
- receiving information from an external service provider 102, e.g. properties of the electricity like current or future electricity price and/or CO2 emissions;
- receiving information inputted by a user of the gateway 101 as to threshold values for the electricity properties, e.g. maximum price and/or maximum CO2 emissions;
- receiving information inputted by the user as to time deadlines for the execution of the respective sporadic loads;
- scheduling 2 the constant loads by adjusting scheduling parameters of the constant loads based on the information received from the external service provider and the inputted properties thresholds;
- scheduling 3 the sporadic loads with respect to time based on the information received from the external service provider and the inputted deadlines, possibly disregarding the inputted thresholds if needed.

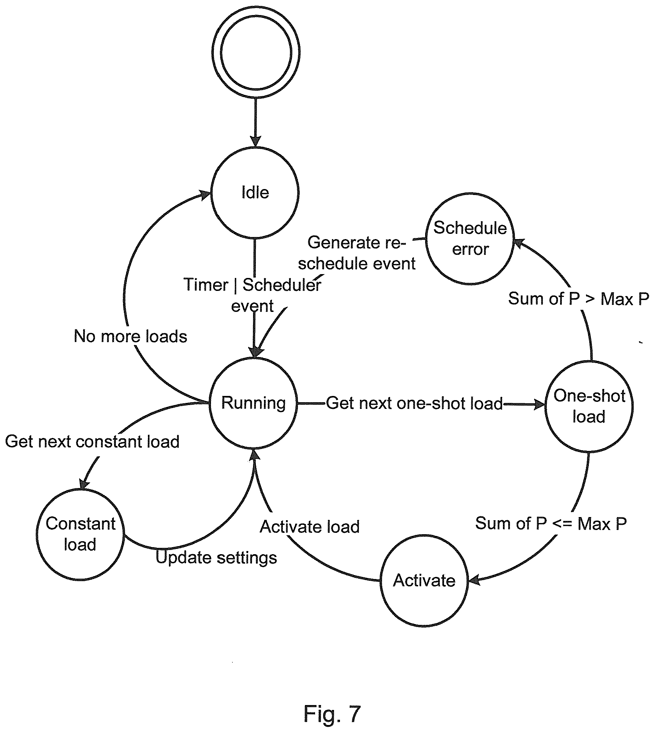

Figure 7 is a schematic diagram illustrating an example embodiment of a dispatcher of an energy management gateway 101, in accordance with the present invention. The Dispatcher is activated through a Timer or Scheduler event. In this example, the timer events occur on an hourly basis (i.e., 13:00, 14:00. etc), and the scheduler events occur when the scheduler has scheduled 3 a one-shot load. The Dispatcher manages all loads 103, constant and one-shot, which are scheduled to run at the current time. The Dispatcher always checks if the sum of Power (P) for the loads it starts is below the maximum Power allowed (dictated by the fuse). If maximum power is violated the dispatcher will create a re-schedule event which activates the scheduler to resolve the issue. Based on the information from the external service provider 102 and the inputted thresholds, the dispatcher schedules 2 a constant load to remain at the same level, to be reduced or to be increased. When there are no timer or scheduler events, the dispatcher is idle.

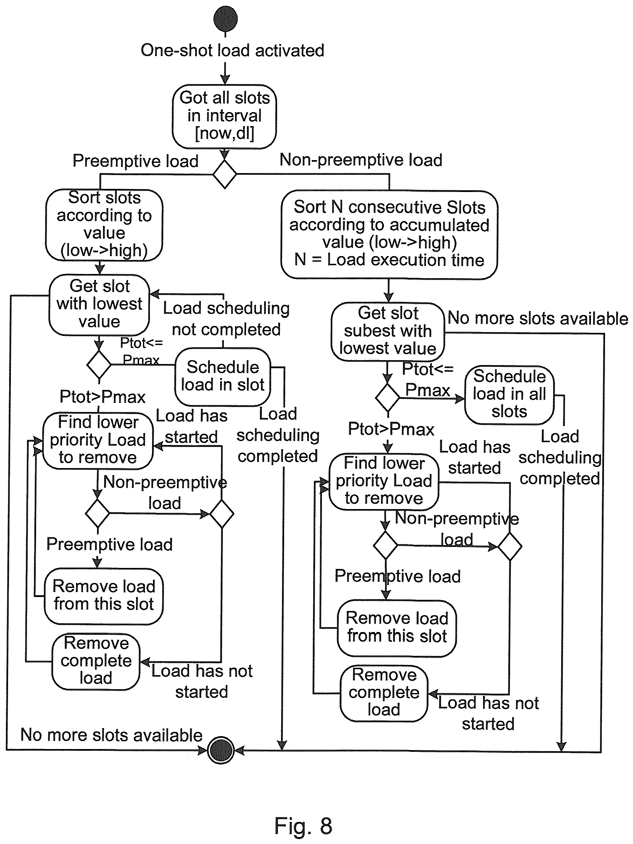

Figure 8 is a schematic flow chart illustrating an example embodiment of a scheduler of an energy management gateway 101, in accordance with the present invention. The Scheduler is responsible for ensuring that activated one-shot loads (e.g., EV, washing machines, etc.) are scheduled 3 in the appropriate time slots, e.g., the slots with the lowest value of price or CO2 emissions or a mix thereof. The scheduler may distinguish between two different types of loads: preemptive and non-preemptive. Preemptive loads can be scheduled in non consecutive slots, e.g., a EV can be charged for several non consecutive hours in the interval between activation and deadline. Non-preemptive loads are loads which have to run in consecutive timeslots, e.g., a washing machine running for three hours might require these to be consecutive in order for the machine to provide a good washing result. Once the scheduler has scheduled 3 a one-shot load it creates an activation event for the dispatcher who will activate and deactivate the tasks according to the new schedule, unless the dispatcher determines that a re-schedule event is needed. Thus, whereas the dispatcher is involved in the scheduling of both the constant loads and the sporadic loads, the scheduler is only involved in the scheduling 3 of the sporadic loads.

The present disclosure has mainly been described above with reference to a few embodiments. However, as is readily appreciated by a person skilled in the art, other embodiments than the ones disclosed above are equally possible within the scope of the present disclosure, as defined by the appended patent claims.

## Claims

1. A method of operating an energy management gateway (101) for scheduling a plurality of electrical loads (103), **characterized by** the following method steps:
categorizing (1) each of the plurality of electrical loads as either a constant load or a sporadic load, wherein a constant load is an electrical load which is not turned off completely, at least not over an extended period of time, and a sporadic load is a load which is only turned on during a limited time period; and
scheduling (2,3) each of the plurality of loads differently based on whether the load has been categorized as a constant load or a sporadic load;
wherein the constant loads are scheduled (2) based on information obtained from an external service provider (102) and/or on information inputted by a user via a user interface (204) of the gateway; and
wherein the sporadic loads are scheduled (3) based on information obtained from an external service provider (102) and/or on information inputted by a user via a user interface (204) of the gateway; and
distinguishing between preemptive and non-preemptive sporadic loads, wherein preemptive sporadic loads can be scheduled in non consecutive timeslots, and non-preemptive sporadic loads are loads which have to run in consecutive timeslots.

2. The method of claim 1, wherein the information obtained from an external service provider comprises demand response information (DR).

3. The method of any preceding claim, wherein the inputted information comprises deadlines for when at least one of the sporadic loads should be scheduled.

4. The method of any preceding claim, wherein the inputted information comprises a threshold value of an electricity property, whereby the scheduling (2) of the constant load(s) comprises reducing or increasing a constant load based on whether the electricity property of available electricity is above or below the threshold.

5. The method of any preceding claim, wherein the sporadic load(s) are scheduled based on information obtained from the external service provider if the user has inputted an enable command via the user interface for enabling use of the information obtained from the external service provider for the scheduling of the sporadic load(s).

6. The method of any preceding claim, wherein the constant load(s) and/or the sporadic load(s) are scheduled based also on obtained information about local energy production.

7. The method of any preceding claim, wherein the user interface comprises a touch screen.

8. The method of any preceding claim, wherein the user interface is connectable to a wireless user equipment.

9. A computer program product comprising computer-executable components for causing an energy management gateway to perform the method of any preceding claim when the computer-executable components are run on processor circuitry comprised in the gateway (101) according to anyone of claims 10 to 11.

10. An energy management gateway (101) configured for scheduling a plurality of electrical loads, charaterized by:
means for categorizing each of the plurality of electrical loads as either a constant load or a sporadic load, wherein a constant load is an electrical load which is not turned off completely, at least not over an extended period of time, and a sporadic load is a load which is only turned on during a limited time period; and
means for scheduling each of the plurality of loads differently based on whether the load has been categorized as a constant load or a sporadic load;
wherein the means for scheduling is configured for scheduling the constant loads based on information obtained from an external service provider (102) and/or on information inputted by a user via a user interface (204) of the gateway, and the means for scheduling is configured for scheduling the sporadic loads based on information obtained from an external service provider (102) and/or on information inputted by a user via a user interface (204) of the gateway; and
wherein the means for scheduling the sporadic loads is configured to distinguish between preemptive and non-preemptive sporadic loads, wherein preemptive sporadic loads can be scheduled in non consecutive timeslots, and non-preemptive sporadic loads are loads which have to run in consecutive timeslots.

11. Energy management gateway of claim 10 comprising:
processor circuitry;
a user interface; and
a storage unit for storing instructions which, when executed by the processor circuitry, cause the gateway to perform the steps of a method according to anyone of the claims 1 to 8.

12. A computer program for an energy management gateway of claim 10 configured for scheduling a plurality of electrical loads, the computer program comprising computer program code which is able to, when run on processor circuitry of the gateway, cause the gateway to perform the steps of a method of anyone of the claims 1 to 8.

## Patentansprüche

1. Verfahren zum Betreiben eines Energiemanagement-Gateways (101) zur zeitlichen Einteilung elektrischer Lasten (103), **gekennzeichnet durch** die folgenden Verfahrensschritte:
Kategorisieren (1) einer jeden der mehreren elektrischen Lasten entweder als eine ständige Last oder eine sporadische Last, wobei eine ständige Last eine elektrische Last ist, die nicht vollständig, zumindest nicht über einen längeren Zeitraum hinweg, ausgeschaltet ist, und eine sporadische Last eine Last ist, die nur über einen begrenzten Zeitraum hinweg eingeschaltet ist; und
unterschiedliches zeitliches Einteilen (2, 3) jeder der mehreren Lasten basierend darauf, ob die als eine ständige Last oder eine sporadische Last kategorisiert worden ist;
wobei die ständigen Lasten basierend auf Informationen, die von einem externen Dienstanbieter (102) bezogen werden, und/oder auf Informationen, die durch einen Benutzer über die Benutzerschnittstelle (204) des Gateways eingegeben werden, zeitlich eingeteilt werden (2); und
wobei die sporadischen Lasten basierend auf Informationen, die von einem externen Dienstanbieter (102) bezogen werden, und/oder auf Informationen, die durch einen Benutzer über die Benutzerschnittstelle (204) des Gateways eingegeben werden, zeitlich eingeteilt werden (3); und
Unterscheiden zwischen unterbrechenden und nichtunterbrechenden sporadischen Lasten, wobei unterbrechende sporadische Lasten in nicht aufeinanderfolgende Zeitschlitze zeitlich eingeteilt werden können und nichtunterbrechende sporadische Lasten Lasten sind, die in aufeinanderfolgenden Zeitschlitzen arbeiten müssen.

2. Verfahren nach Anspruch 1, wobei die Informationen, die von einem externen Dienstanbieter bezogen werden, Laststeuerungsinformationen (DR) umfassen.

3. Verfahren nach einem der vorhergehenden Ansprüche, wobei die eingegebenen Informationen Fristen dazu, wann mindestens eine der sporadischen Lasten zeitlich eingeteilt werden sollte, umfassen.

4. Verfahren nach einem der vorhergehenden Ansprüche, wobei die eingegebenen Informationen einen Schwellenwert einer Stromeigenschaft umfassen, wobei das zeitliche Einteilen (2) der ständigen Last(en) ein Reduzieren oder Erhöhen einer ständigen Last basierend darauf, ob die Stromeigenschaft verfügbaren Stroms über oder unter dem Schwellenwert liegt, umfasst.

5. Verfahren nach einem der vorhergehenden Ansprüche, wobei die sporadische(n) Last(en) basierend auf Informationen, die von dem externen Dienstanbieter bezogen werden, zeitlich eingeteilt werden, wenn der Benutzer einen Aktivierungsbefehl zum Aktivieren der Verwendung der Informationen, die von dem externen Dienstanbieter zum zeitlichen Einteilen der sporadischen Last(en) bezogen werden, über die Benutzerschnittstelle eingegeben hat.

6. Verfahren nach einem der vorhergehenden Ansprüche, wobei die konstante(n) Last(en) und/oder die sporadische(n) Last(en) außerdem basierend auf bezogenen Informationen zur lokalen Energieerzeugung zeitlich eingeteilt werden.

7. Verfahren nach einem der vorhergehenden Ansprüche, wobei die Benutzerschnittstelle einen Berührungsbildschirm aufweist.

8. Verfahren nach einem der vorhergehenden Ansprüche, wobei die Benutzerschnittstelle mit einem drahtlosen Benutzergerät verbunden werden kann.

9. Computerprogrammprodukt, das computerausführbare Komponenten aufweist, die einen Energiemanagement-Gateway zur Durchführung des Verfahrens nach einem der vorhergehenden Ansprüche veranlassen, wenn die computerausführbaren Komponenten auf einer Prozessorschaltung ausgeführt werden, die in dem Gateway (101) nach einem der Ansprüche 10 bis 11 enthalten ist.

10. Energiemanagement-Gateway (101), der zur zeitlichen Einteilung mehrerer elektrischer Lasten ausgelegt ist, **gekennzeichnet durch**:
Mittel zur Kategorisierung einer jeden der mehreren elektrischen Lasten entweder als eine ständige Last oder eine sporadische Last, wobei eine ständige Last eine elektrische Last ist, die nicht vollständig, zumindest nicht über einen längeren Zeitraum hinweg, ausgeschaltet ist, und eine sporadische Last eine Last ist, die nur über einen begrenzten Zeitraum hinweg eingeschaltet ist; und
Mittel zur unterschiedlichen zeitlichen Einteilung einer jeden der mehreren Lasten basierend darauf, ob die Last als eine ständige Last oder eine sporadische Last kategorisiert worden ist;
wobei die Mittel zur zeitlichen Einteilung dafür ausgelegt sind, die ständigen Lasten basierend auf Informationen, die von einem externen Dienstanbieter (102) bezogen werden, und/oder auf Informationen, die durch einen Benutzer über eine Benutzerschnittstelle (204) des Gateways eingegeben werden, zu zeitlich einzuteilen, und wobei die Mittel zur zeitlichen Einteilung dafür ausgelegt sind, die sporadischen Lasten basierend auf Informationen, die von einem externen Dienstanbieter (102) bereitgestellt werden, und/oder auf Informationen, die durch einen Benutzer über eine Benutzerschnittstelle (204) des Gateways eingegeben werden, zeitlich einzuteilen; und
wobei die Mittel zur zeitlichen Einteilung der sporadischen Lasten dafür ausgelegt sind, zwischen unterbrechenden und nichtunterbrechenden sporadischen Lasten zu unterscheiden, wobei unterbrechende sporadische Lasten in nicht aufeinanderfolgenden Zeitschlitzen zeitlich eingeteilt werden können und nichtunterbrechende sporadische Lasten Lasten sind, die in aufeinanderfolgenden Zeitschlitzen arbeiten müssen.

11. Energiemanagement-Gateway nach Anspruch 10, aufweisend:
eine Prozessorschaltung;
eine Benutzerschnittstelle; und
eine Speichereinheit zum Speichern von Anweisungen, die, wenn sie durch die Prozessorschaltung ausgeführt werden, das Gateway dazu veranlassen, die Schritte eines Verfahrens nach einem der Ansprüche 1 bis 8 durchzuführen.

12. Computerprogramm für ein Energiemanagement-Gateway nach Anspruch 10, das zur zeitlichen Einteilung mehrerer elektrischer Lasten ausgelegt ist, wobei das Computerprogramm Computerprogrammcode aufweist, der in der Lage ist, wenn er auf einer Prozessorschaltung des Gateways ausgeführt wird, das Gateway zu veranlassen, die Schritte eines Verfahrens nach einem der Ansprüche 1 bis 8 durchzuführen.

## Revendications

1. Procédé de fonctionnement d'une passerelle de gestion d'énergie (101) pour planifier une pluralité de charges électriques (103), **caractérisé par** les étapes de procédé suivantes :
le classement (1) de chacune de la pluralité de charges électriques en tant que charge constante ou charge sporadique, une charge constante étant une charge électrique qui n'est pas complètement coupée, du moins pas sur une période de temps prolongée, et une charge sporadique étant une charge qui est allumée seulement pendant une période de temps limitée ; et
la planification (2, 3) de chacune de la pluralité de charges différemment selon que la charge a été classée comme une charge constante ou une charge sporadique ;
les charges constantes étant planifiées (2) sur la base d'informations obtenues d'un fournisseur de service externe (102) et/ou d'informations saisies par un utilisateur via une interface utilisateur (204) de la passerelle ; et
les charges sporadiques étant planifiées (3) sur la base d'informations obtenues d'un fournisseur de service externe (102) et/ou d'informations saisies par un utilisateur via une interface utilisateur (204) de la passerelle ; et
la distinction entre les charges sporadiques préventives et non préventives, les charges sporadiques préventives pouvant être planifiées dans des intervalles de temps non consécutifs, et les charges sporadiques non préventives étant des charges qui doivent fonctionner dans des intervalles de temps consécutifs.

2. Procédé selon la revendication 1, les informations obtenues d'un fournisseur de services externe comprenant des informations de réponse à la demande (DR).

3. Procédé selon n'importe quelle revendication précédente, les informations saisies comprenant des dates limites pour le moment où au moins l'une des charges sporadiques doit être planifiée.

4. Procédé selon n'importe quelle revendication précédente, les informations saisies comprenant une valeur seuil d'une propriété d'électricité, la planification (2) de la ou des charges constantes comprenant la réduction ou l'augmentation d'une charge constante selon que la propriété d'électricité de l'électricité disponible est supérieure ou inférieure au seuil.

5. Procédé selon n'importe quelle revendication précédente, la ou les charges sporadiques étant planifiées sur la base d'informations obtenues du fournisseur de services externe si l'utilisateur a saisi une commande de validation via l'interface utilisateur pour permettre l'utilisation des informations obtenues du fournisseur de services externe pour la planification de la ou des charges sporadiques.

6. Procédé selon n'importe quelle revendication précédente, la ou les charges constantes et/ou la ou les charges sporadiques étant planifiées également sur la base des informations obtenues sur la production locale d'énergie.

7. Procédé selon n'importe quelle revendication précédente, l'interface utilisateur comprenant un écran tactile.

8. Procédé selon n'importe quelle revendication précédente, l'interface utilisateur pouvant être connectée à un équipement utilisateur sans fil.

9. Produit de programme informatique comprenant des composants exécutables par ordinateur pour amener une passerelle de gestion d'énergie à réaliser le procédé selon n'importe quelle revendication précédente lorsque les composants exécutables par ordinateur fonctionnent sur un circuit de processeur compris dans la passerelle (101) selon l'une quelconque des revendications 10 et 11.

10. Passerelle de gestion d'énergie (101) configurée pour planifier une pluralité de charges électriques, **caractérisée par** :
des moyens pour classer chacune de la pluralité de charges électriques en tant que charge constante ou charge sporadique, une charge constante étant une charge électrique qui n'est pas complètement coupée, du moins pas sur une période de temps prolongée, et une charge sporadique étant une charge qui est allumée seulement pendant une période de temps limitée ; et
des moyens pour planifier chacune de la pluralité de charges différemment sur la base du fait que la charge a été classée comme charge constante ou charge sporadique ;
les moyens pour planifier étant configurés pour planifier les charges constantes sur la base d'informations obtenues d'un fournisseur de services externe (102) et/ou d'informations saisies par un utilisateur via une interface utilisateur (204) de la passerelle, et les moyens pour planifier étant configurés pour planifier les charges sporadiques sur la base des informations obtenues par un fournisseur de services externe (102) et/ou des informations saisies par un utilisateur via une interface utilisateur (204) de la passerelle ; et
les moyens pour planifier les charges sporadiques étant configurés pour distinguer les charges sporadiques préventives des charges sporadiques non préventives, les charges sporadiques préventives pouvant être planifiées dans des intervalles de temps non consécutifs, et les charges sporadiques non préventives étant des charges qui doivent fonctionner dans des intervalles de temps consécutifs.

11. Passerelle de gestion d'énergie selon la revendication 10 comprenant :
des circuits de processeur ;
une interface utilisateur ; et
une unité de stockage pour stocker des instructions qui, lorsqu'elles sont exécutées par les circuits de processeur, amènent la passerelle à réaliser les étapes d'un procédé selon l'une quelconque des revendications 1 à 8.

12. Programme informatique pour une passerelle de gestion d'énergie selon la revendication 10, configuré pour planifier une pluralité de charges électriques, le programme informatique comprenant un code de programme informatique qui est capable, lorsqu'il fonctionne sur un circuit de processeur de la passerelle, d'amener la passerelle à réaliser les étapes d'un procédé selon l'une quelconque des revendications 1 à 8.
